# EUROPEAN PATENT SPECIFICATION

(11) **EP 2 061 164 B1**
(45) Date of publication and mention of the grant of the patent: **15.04.2015**
(21) Application number: 07801025.3
(22) Date of filing: 04.09.2007
(51) Int. Cl.: H04J 3/14, H04J 3/16

(54) **A METHOD FOR REALIZING THE SUBNETWORK CONNECTION PROTECTION WITH SUB-LAYER MONITORING OF K RANK OPTICAL CHANNEL DATA UNIT AND AN APPARATUS THEREOF**
VERFAHREN ZUR REALISIERUNG DES SUBNETZWERK-VERBINDUNGSSCHUTZES MIT SUBSCHICHTÜBERWACHUNG EINER OPTISCHEN K-RANG-KANALDATENEINHEIT UND VORRICHTUNG DAMIT
PROCÉDÉ POUR RÉALISER LA PROTECTION DE CONNEXION PAR SOUS-RÉSEAU AVEC SURVEILLANCE DE SOUS-COUCHE D'UNITÉ DE DONNÉES DE CANAL OPTIQUE DE RANG K, ET APPAREIL CORRESPONDANT

(30) Priority: 11.09.2006 CN 200610152098
(43) Date of publication of application: 20.05.2009
(73) Proprietor: Huawei Technologies Co., Ltd., Longgang District Shenzhen, Guangdong 518129 (CN)
(72) Inventor: YAN, Jun, Guangdong 518129 (CN)
(74) Representative: Thun, Clemens
(86) International application number: PCT/CN2007/070616
(87) International publication number: WO 2008/031356

(56) References cited:
- EP-A1- 1 083 691
- EP-A1- 1 411 665
- EP-A1- 1 411 665
- EP-A1- 1 538 765
- EP-A1- 1 538 765
- US-A1- 2003 097 472
- US-A1- 2003 123 493
- "Interfaces for the Optical Transport Network (OTN); G.709/Y.1331 (03/03)" ITU-T STANDARD IN FORCE (I), INTERNATIONAL TELECOMMUNICATION UNION, GENEVA, CH, no. G.709/Y.1331 (03/03), 16 March 2003 (2003-03-16), XP017400848

## Description

### FIELD OF THE INVENTION

The present invention relates to the field of Optical Transport Networks (OTNs), and in particular, to a method and an apparatus for implementing SubNet Connection Protection (SNCP) with Sub-layer monitoring (SNC/S) on an optical channel data unit (ODUk, in which the index "k" is used to represent a supported bit rate and different versions of ODUk and k = 1, 2 or 3).

### BACKGROUND

An OTN is a group of function entities that enable transport, multiplexing, routing, monitoring and survivability operations for client-layer signals primarily on an optical domain, and is an outcome of evolution from the traditional Wavelength Division Multiplexing (WDM) technology based on point-to-point transmission.

An OTN consists of an optical channel (Och) layer, an Optical Multiplex Section (OMS) layer, and an Optical Transmission Section (OTS) layer. Client-layer signals are encapsulated digitally first, mapped to the OCh layer, and then multiplexed to the OMS layer, and finally transmitted on an optical cable through the OTS layer. Subnets generally belong to different operators, and may be managed and maintained by different operators. In order to ensure quality of signal transmission, each operator may use different protection modes to protect the signal transmission. In the process of practices and applications, the inventor discovers that the existing protocol describes the SNCP only from the perspective of requirements, and specifies neither the method of implementing SNCP nor the method or apparatus for implementing SNCP with Sub-layer monitoring (SNC/S).

An OCh layer consists of optical channel transport unit (OTUk), optical channel data unit (ODUk), and optical channel payload unit (OPUk), in which the index "k" is used to represent a supported bit rate and different versions of OPUk, ODUk and OTUk and k = 1, 2 or 3.

US 2003/097472 A1 discloses that in a synchronous hierarchic network having multi-level tandem connection monitoring, all of the fields containing tandem connection monitoring information associated with trail terminations at a subject network element are processed in parallel at the subject network element. The network element extracts the tandem connection monitoring information from received signals independently for each of the tandem connection monitoring terminations occurring at the network element.

EP 1083691 A1 discloses that according to the invention a synchronous hierarchic network system and a method of transmitting data are disclosed using at least a path segment between a first network element (A) and at least a second network element (F) on which a tandem connection monitoring (TC) method is established for monitoring information over said path segment, and means for suppressing the insertion of all ones caused by the out of multiframe state subsequent to an interruption, distortion or switching operation of the signal transmission path for a predefined time interval.

The recommendation "interfaces for the optical transport network (OTN); G 709/Y. 1331 (03/03)" ITU-T STANDARD IN FORCE (I), INTERNATIONAL TELECOMMUNICATION UNION, GENEVA, CH, no. G 709/Y. 1331(03/03), 16 March 2003 (2003-03-16), XP017400848, defines the requirements of the optical transport module of order n signals of the optical transport network.

### SUMMARY

A method and an apparatus for implementing SNCP with Sub-layer monitoring (SNC/S) on an ODUk are provided in an embodiment of the present invention to implement ODUk SNC/S protection and interoperability between multiple SNC/S entities.

A method for implementing SNC/S on an ODUk according to an embodiment of the present invention includes:
configuring a first Tandem Connection Monitoring (TCM) level and a second TCM level to an ODUk service, configuring a first SNC/S protection and a second SNC/S protection for the ODUk service, wherein a dual-transmitter node and a first selective-receiver node are obtained under the first SNC/S protection and the dual-transmitter node and a second selective-receiver node are obtained under the second SNC/S protection, wherein the first SNC/S protection includes a first working service trail and a first protection service trail that are between the dual-transmitter node and the first selective-receiver node and use the first TCM level, and wherein the second SNC/S protection includes a second working service trail and a second protection service trail that use the second TCM level;
if a signal flow direction of the first TCM level is from the dual-transmitter node to the first selective-receiver node over the first working service trail and the first protection service trail and a signal flow direction of the second TCM level is from the dual-transmitter node to the second selective-receiver node over the second working service trail and the second protection service trail, handling the first TCM level through a tributary unit that is a function unit used by the first TCM level and the second TCM level through optical line units that are function units used by the second TCM level;
wherein the optical line units are connected to the tributary unit via a cross-connect unit (11) and include a first optical line unit (OLU) a second OLU and a third OLU, wherein the first OLU corresponds to the first protection service trail, the second OLU corresponds to the first working service trail and the second working service trail, and the third OLU corresponds to the second protection service trail.

The foregoing technical solution reveals that the present invention allocates a TCM level for SNC/S protection, and allocates different TCM levels for the same node, where different TCM levels are executed in the specified sequence in the same node, thus implementing SNC/S protection and interoperability between multiple SNC/S entities.

### BRIEF DESCRIPTION OF THE DRAWINGS

Figure 1 is a flowchart of the SNC/S protection method according to an embodiment of the present invention;
Figure 2 is a flowchart of configuring a TCM level according to an embodiment of the present invention;
Figure 3 is block diagram of an SNC/S protection apparatus according to an embodiment of the present invention;
Figure 4 is a block diagram of a protection apparatus according to an embodiment of the present invention; and
Figure 5 a networking diagram of the ODUk service nodes according to an embodiment of the present invention.

### DETAILED DESCRIPTION

The present invention is hereinafter described in detail with reference to embodiments and accompanying drawings.

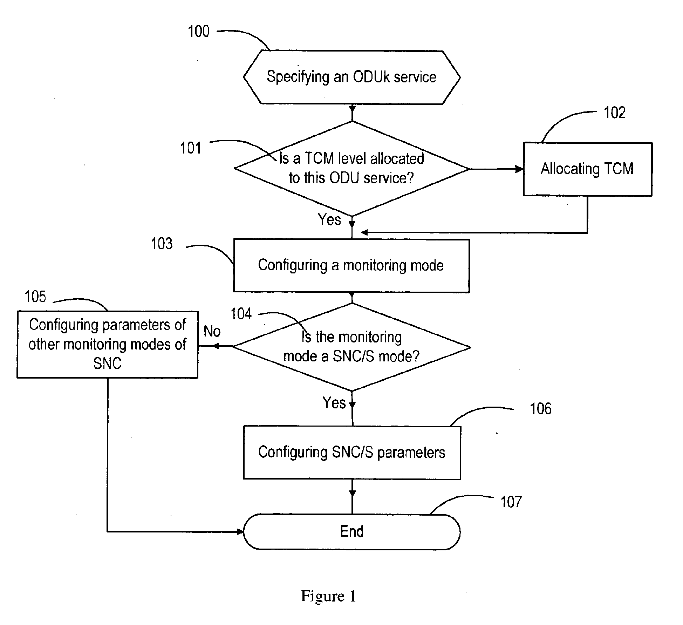

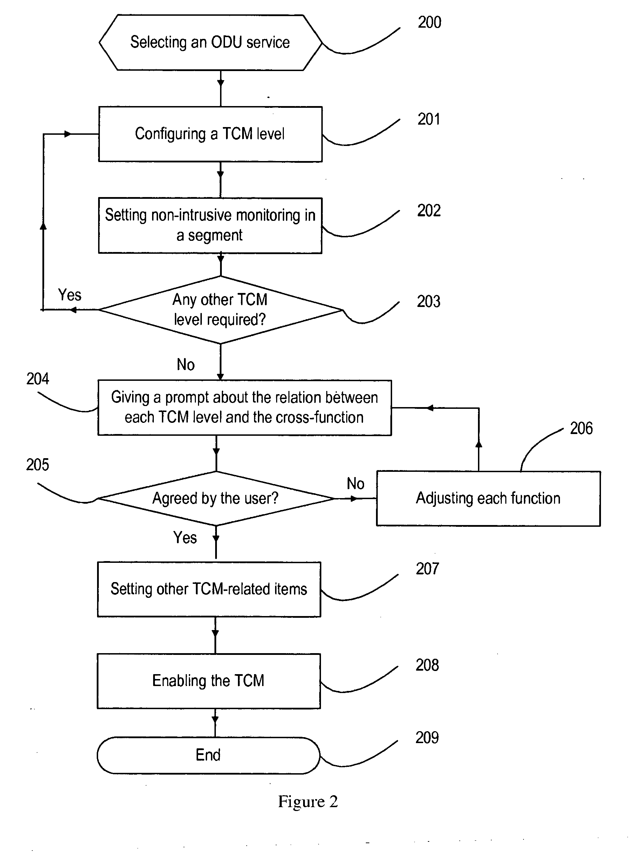

As shown in Figure 1, the process of configuring SNC/S protection includes the steps described hereinafter.
Step 100: Specifying an ODUk service.
Step 101: Judging whether a TCM level is allocated to the ODUk service. If so, the process proceeds to Step 103; if not, the process proceeds to Step 102, in which a TCM level is allocated to the ODUk service, as illustrated in Figure 2.
Step 103: Configuring an SNC protection monitoring mode. The monitoring modes involved by the SNC include: /S, /N, and /I, where:
   SNC/I denotes inherently monitored SNC;
   SNC/N denotes non-intrusive monitored SNC; and
   SNC/S denotes sub-layer monitored SNC.
Step 104: Judging whether the configured monitoring mode is SNC/S; if so, the process proceeds to Step 106; if not, the process proceeds to Step 105.
Step 105: Configuring the SNC parameters of other monitoring modes. The present invention does not involve the monitoring modes other than /S.
Step 106: Configuring SNC/S parameters. This step is performed to obtain dual-transmitter nodes and selective-receiver nodes with SNC/S protection, obtain a working service trail and a protection service trail, obtain the TCM level corresponding to this protection, and determine the relationship between this protection and other SNC protection.
Step 107: End.

Figure 2 shows the process of allocating a TCM level to the ODUk service, including the steps described hereinafter.
Step 200: Specifying an ODUk service. In this step, the user needs to select an ODU service to which a TCM level will be allocated, and specify whether to use the TCM in a unidirectional or bidirectional way.
Step 201: Configuring a TCM level.
Step 202: Configuring non-intrusive monitoring in a segment. On an ODUk service trail, among the nodes that use this TCM level, the user specifies the node that needs non-intrusive monitoring.
Step 203: Checking whether any other TCM level needs to be configured. If so, the process proceeds to Step 201; if not, the process proceeds to Step 204.
Step 204: Sending allocation results to the user, including the results of allocating different TCM levels to different nodes, the sequence of handling different TCM levels in one node, and the location relations thereof with cross-connect functions.
Step 205: The user confirms whether to agree to the allocation. If the user agrees to the allocation, the Network Management System (NMS) sends the results of the previous automatic allocation and configuration to the node device, and then the process proceeds to Step 207. If the user does not agree, the process proceeds to Step 206.
Step 206: The user adjusts all functions, and the NMS provides Graphic User Interfaces (GUIs) for the user to adjust the relations between the functions. For example, the user may adjust the allocation of different TCM levels among different nodes, and the sequence of handling TCM levels in one node.
Step 207: Based on the results of allocating the TCM level in the previous step, the NMS provides the specific configuration interface for the user to configure other TCM levels according to the state of using each TCM level on different nodes.

For the source node that uses a TCM level, the user needs to set transmitting-related attributes, including a deliverable Trail Trace Identifier (TTI).

For the sink node that uses a TCM level, the user needs to set receiving-related attributes, including one or more of these items:
setting whether to enable insertion of maintenance signals into the subsequent ODUk trails; setting whether to transfer the TCM signal failure and deterioration information to subsequent layers;
setting enabling of subsequent actions of trail Trace Identifier Mismatch (TIM) and Loss of Tandem Connection (LTC);
setting receivable TTI of TCM;
setting a TIM detection mode of the TCM;
setting Bit Interleaved Parity check order-8 (BIP-8) alarm threshold of TCM; and
setting whether to use locked detects (LCK) and Open Connection Indication (OCI) as conditions of inserting an Alarm Indication Signal (AIS).

If the user sets to enable insertion of maintenance signals into the subsequent ODUk trail, the system inserts the maintenance signals into the overhead such as state field (STAT) and the payload according to the configuration and the previously received signals, where the maintenance signals are defined in compliance with G.709 16.5.

If the user sets to transfer the TCM signal failure and deterioration information to the subsequent layer, the system transfers Trail Signal Failure/Service Signal Failure (TSF/SSF) information to the subsequent layer when a defect is detected as a condition of subsequent action TSF or SSF.

If the user sets to enable subsequent actions of Loss of Tandem Connection (LTC), upon detecting an LTC defect, the system inserts a maintenance signal "AIS" to the overhead such as STAT and the payload and transfers the TSF/SSF information to the subsequent layer.

If the user sets locked defect (LCK) as a condition for inserting an AIS, the system inserts an AIS upon detecting an LCK defect.

If the user sets to use OCI as a condition for inserting an AIS, the system inserts an AIS upon detecting an OCI defect.

For an intermediate node that uses a TCM level, the user does not need to set other items if the user does not set enabling of non-intrusive monitoring. If the user sets enabling of non-intrusive monitoring, the user needs to further set:
whether to transfer TCM signal failure and deterioration information to the subsequent layer;
enabling of subsequent actions of TIM and LTC;
receivable TTI of TCM;
TIM detection mode of TCM; and
BIP-8 alarm threshold of TCM.

Step 208: Enabling or disabling TCM.

The user may set enabling or disabling of each TCM level for the source node or sink node that uses the TCM function separately. If the user sets to enable TCM, the system handles according to the set TCM attributes. For a source node that uses a TCM level, the system inserts the configured receivable TTI into the overhead of the TCM level, calculates the BIP-8 and inserts it into the overhead. Moreover, the system inserts Backward Defect Indicator (BDI), Backward Error Indicator (BEI), and Backward Incoming Alignment Error (BIAE) according to the state of the source function. For a sink node that uses a TCM level, the system monitors the TCM according to the attributes of the configured TCM, and reports the alarm performance of the TCM level. If the user sets a protection group related to the TCM level, the system performs protection switching first as triggered by the defects obtained according to the TCM level. If the user sets to disable the TCM level, the system does not handle this TCM level.
Step 209: End.

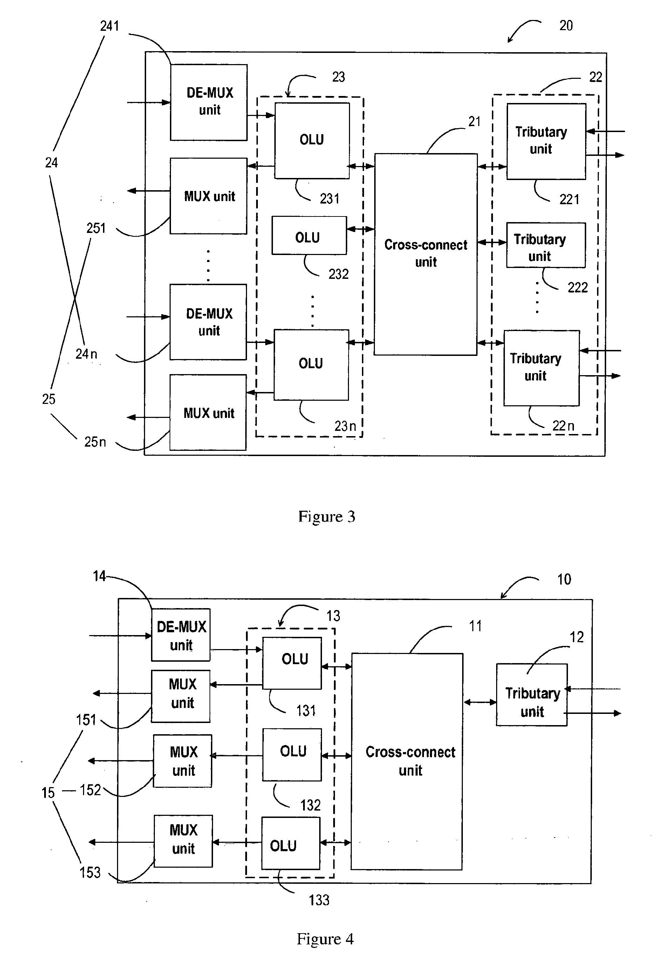

Figure 3 is a block diagram of an SNC/S protection apparatus 20 provided by the present invention. The protection apparatus 20 includes: a cross-connect unit 21, a tributary unit 22, an Optical Line Unit (OLU) 23, an optical demultiplexer (DE-MUX) unit 24, and an optical multiplexer (MUX) unit 25. As required, a tributary unit 22 may be subdivided into tributary units 221, 222...22n; an OLU 23 may be subdivided into OLUs 231, 232...23n; a DE-MUX unit 24 may be subdivided into DE-MUX units 241...24n; a MUX unit 25 may be subdivided into MUX units 251...25n. The functions of the units and interrelations thereof are illustrated in Figure 4.

Figure 4 shows an SNC/S protection apparatus in an embodiment of the present invention. The SNC/S protection apparatus 10 includes: a cross-connect unit 11, a tributary unit 12, an OLU 13, a DE-MUX unit 14, and a MUX unit 15. An OLU 11 is subdivided into an OLU 131, an OLU 132, and an OLU 133. A MUX unit 15 is subdivided into a MUX unit 151, a MUX unit 152, and a MUX unit 153. The units are described below in detail.

The tributary unit 12 is adapted to perform conversion between a user signal and an ODUk service signal. One side of the tributary unit 12 is a subscriber side adapted to input and output user signals; the other side of the tributary unit 12 is a cross-connection side, which is connected with the cross-connect unit 11 and adapted to input and output ODUk service signals.

The trail of ODUk service signals is configurable. That is, the tributary unit 12 may enable or disable the TCM for the source or sink node of the signals from the cross-connect side or subscriber side, and send the signals to the cross-connect side or subscriber side of the tributary unit 12. For example, after a user signal enters the tributary unit 12, the tributary unit 12 handles the adaptation source function for the input user signal from the ODUk layer to the client signal, handles the termination source function of the ODUk Path (ODUkP) layer, handles the adaptation source function from one or more ODUk TCM sub-layers to an ODUk layer, and handles the terminal source function on one or more ODUk TCM (ODUkT) layers. Afterward, the user signal is sent to the cross-connect unit 11. After the ODUk signal enters the tributary unit 12 from the cross-connect unit 11, the tributary unit 12 handles the termination sink function for the input ODUk signal on one or more ODUkT layers, handles the adaptation sink function from one or more ODUk TCM sub-layers to an ODUk layer, handles the termination sink function on an ODUk layer, and handles the adaptation sink function from an ODUk layer to the client signal, and then the signal is sent to the subscriber side.

The TCM function is optional on the tributary unit 12. A TCM function comes in one or more levels, but not greater than six levels.

An OLU 13 is adapted to perform conversion between a signal of the optical channel layer and an ODU signal. One side of the OLU 13 is a cross-connect side, which is connected with the cross-connect unit 11 and adapted to input and output ODUk service signals. The other side of the OLU 13 is a line side, which is adapted to receive the optical channel layer signals input by the DE-MUX unit 14 and output the optical channel signals to the MUX unit 15.

The trail of ODUk service signals is configurable. That is, the OLU 13 may enable or disable the TCM for the source or sink node of the signals from the cross-connect side or line side, and send the signals to the cross-connect side or line side of the line unit 13. For example, after an ODUk signal enters the OLU 13 from the cross-connect unit 11, the OLU 13 handles the adaptation source function for the input ODUk signal from one or more ODUk TCM sub-layers to an ODUk layer, handles the termination source function on one or more ODUkT layers, handles the adaptation source function from an OTUk layer to an ODUk layer, handles the termination source function on an OTUk layer, handles the adaptation source function from an optical channel layer (OCh) to an OTUk layer, and handles the source function on an OCh layer. Afterward, the signal is sent to the MUX unit 15. After the signal enters the OLU from the DE-MUX unit 14, the OLU 13 handles the termination sink function for the OCh layer signal input by the DE-MUX unit 14 on an OCh layer, handles the adaptation sink function from an OCh layer to an OTUk layer, handles the termination sink function on an OTUk layer, handles the adaptation sink function from an OTUk layer to an ODUk layer, handles the termination sink function on one or more ODUk TCM sub-layers, and handles the adaptation sink function from one or more ODUk TCM sub-layers to an ODUk layer, and then the signal is sent to the cross-connect unit 11.

The TCM function is optional on the OLU unit 13. A TCM function comes in one or more levels, but not greater than six levels.

The cross-connect unit 11 performs ODUk service cross-connection, sends the signal output by the tributary unit 12 to the cross-connect unit 11 to any OLU 13, and sends the signal output by the OLU 13 to the cross-connect unit 11 to any tributary unit 12.

The DE-MUX unit 14 is adapted to divide a multi-wavelength optical signal into multiple signals of the optical channel layer, and output the signals to the OLU 13.

The MUX unit 15 is adapted to combine multiple signals of the optical channel layer together, and output the signals to one fiber for transmitting.

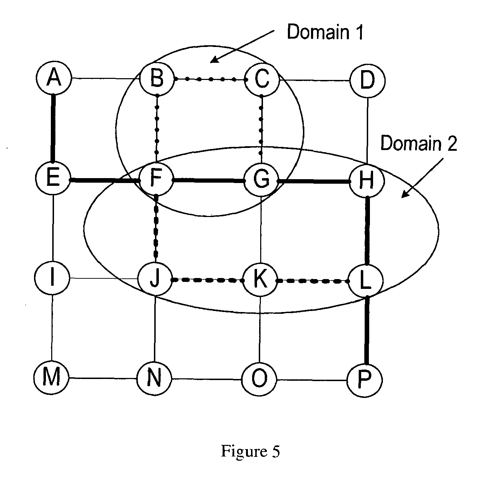

Figure 5 shows node networking, which uses the process shown in Figure 1 and Figure 2 and uses the protection apparatus shown in Figure 3 and Figure 4 when handling SNC/S protection. The process of configuring SNC/S protection for an ODUk service is detailed below.

Refer to Figure 1 and Figure 2 for the steps described hereinafter.
Step 100: Specifying an ODUk service.

The user specifies node A as the source node of the ODUk service, specifies the nodes E, F, G, H and L as intermediate nodes of the ODUk service, and configures parameters for the source node A and sink node P, for example, BIP-8 threshold, TTI, receivable TTI, and enabling of subsequent actions of TIM.
Step 101: Checking whether a TCM level is allocated to this ODUk service. If no TCM level is allocated, the process proceeds to Step 102, namely, 200 in Figure 2.
Step 200: Specifying an ODUk service, and configuring whether the TCM is used in a unidirectional or bidirectional way. For example, the user specifies the ODUk service configured previously to use TCM in a unidirectional way.
Step 201: Configuring TCM1. For example, the user configures TCM1 which is applied to domain 1, the application scope being nodes F and G.
Step 202: Setting non-intrusive monitoring in a segment. For example, the user configures no need of non-intrusive monitoring.
Step 203: Checking whether any other TCM level needs to be configured. If the user selects "Yes", the process proceeds to Step 201.
Step 201: Configuring TCM2. The user configures TCM2 which is applied to domain 2, the application scope being nodes F and G.
Step 202: Setting non-intrusive monitoring in a segment. For example, the user configures no need of non-intrusive monitoring.
Step 203: Checking whether any other TCM level needs to be configured. If the user selects "No", the process proceeds to Step 204.
Step 204: Sending the allocation result to the user, namely, informing the user of the relations between TCM levels and the relations between cross-connect functions.

The NMS displays the results of configuring TCM1 and TCM2 previously, and two TCM levels are used among the nodes starting from F. If the user selects node F, the TCM function on node F is performed by the devices shown in Figure 3 and Figure 4. According to the signal flow direction, the sequence of performing the TCM function is: TCM1 -> TCM2. The source function of TCM1 is performed on a tributary unit, and the source function of TCM2 is performed on an OLU.
Step 205: The user confirms whether to agree the allocation. For example, the user agrees. The NMS instructs the device to set the TCM1 in the transmitting direction of node F to the operation mode, set the TCM1 in the receiving direction of node G to the operation mode, set the TCM2 in the transmitting direction of node F to the operation mode, and set the TCM2 in the receiving direction of node L to the operation mode. Afterward, the process proceeds to Step 207.
Step 207: Setting other TCM-related items. For each TCM level, the NMS provides the corresponding configuration interfaces to the user according to the state of using the TCM on each different node.

For the node F that starts using TCM1, the user configures the attributes related to transmitting of the TCM1: transmittable TTI. For the node F that starts using TCM2, the user configures the attributes related to transmitting of the TCM2: transmittable TTI.

Moreover, the user configures the relevant parameters for the source node F and sink node G of the TCM1, for example, BIP8 threshold, receivable TTI, enabling of subsequent actions of TIM, and LTC insertion Alarm Indication Signal (AIS). For TCM2, the user sets the TCM2 in the transmitting direction of node F to the operation mode, sets the TCM2 in the receiving direction of node L to the operation mode, and configures the relevant parameters for the source node F and sink node L of the TCM2, for example, BIP8 threshold, transmittable TTI, receivable TTI, enabling of subsequent actions of TIM, and LTC insertion AIS.
Step 208: Enabling or disabling TCM. For example, if the user sets to disable the TCM1 function, the system converts the disabling of TCM1 to the disabling of the TCM1 sink function, and sends the disabling to the sink node G that uses TCM. The system converts the disabling of TCM1 to the disabling of the TCM1 source function, and sends the disabling to the source node F that uses TCM. For example, if the user sets to disable the TCM2 function, the system converts the disabling of TCM2 to the disabling of the TCM2 sink function, and sends the disabling to the sink node G that uses TCM. The system converts the disabling of TCM2 to the disabling of the TCM2 source function, and sends the disabling to the source node F that uses TCM. In this embodiment, the TCM function is disabled first, and is enabled again after the functions related to the SNC/S are configured.
Step 209: End. Afterward, Step 103 shown in Figure 1 takes place.
Step 103: Configuring an SNC protection monitoring mode. For example, the user selects SNC/S as the monitoring mode.
Step 104: Checking whether SNC/S is configured as a monitoring mode. If so, the process proceeds to Step 106.
Step 106: Configuring SNC/S parameters. Through this step, obtaining a dual-transmitter node and a selective-receiver node under SNC/S protection, and obtains a working service trail and a protection service trail.

Protection 1: dual-transmitter node F, selective-receiver node G, the working service trail is "FG", and uses TCM1; the protection service trail is "FBCG", and uses TCM1.

Protection 2: dual-transmitter node F, selective-receiver node L, the working service trail is "FGHL", and uses TCM2; the protection service trail is "FJKL", and uses TCM2.

As shown in Figure 4, the node F requires the source function of TCM1 and TCM2. Along the signal flow direction on the node F, the functions of the function units are: the signal is routed from the OLU 131 to the cross-connect unit 11 to the OLU 132; the source function of TCM1 is performed on the OLU 131, and the source function of TCM2 is performed on the OLU 132. That is equivalent to control of the execution sequence between different TCM levels, and between a TCM and a cross-connect unit 11. As a result, according to the signal flow direction, the system handles the source function of TCM1 first, then the cross-connect unit 11, and then the source function of TCM2.

Along the direction to node B, the signal passes through the following function units consecutively: DEMUX unit 14, OLU unit 131, cross-connect unit 11, tributary unit 12, cross-connect unit 11, OLU unit 131, and MUX unit 151.

Along the direction to node G, the signal passes through the following function units consecutively: DEMUX unit 14, OLU unit 131, cross-connect unit 11, tributary unit 12, cross-connect unit 11, OLU unit 132, and MUX unit 152.

Along the direction to node J, the signal passes through the following function units consecutively: DEMUX unit 14, OLU unit 131, cross-connect unit 11, tributary unit 12, cross-connect unit 11, OLU unit 133, and MUX unit 153.

On node F, the TCM1 and the TCM2 handle the source function. Therefore, TCM1 is handled on the tributary unit, and TCM2 is handled on the OLUs 131, 132, and 133.

The system determines the flow direction of the TCM signal and the function units that are used in the working trail and protection unit respectively in the device. This process may be configured and specified by the user, or allocated by the system automatically.

Therefore, the TCM level corresponding to this protection is obtained, and the relation between this protection and other SNC protection is determined.

The TCM-related configuration and the SNC/S-related configuration are finished. At this moment, the user sets to enable TCM1 and TCM2;
Step 107: End.

Through the foregoing embodiments, it is evident that the different TCM levels are executed in the same node in the specified sequence, if different TCM levels are allocated to the same node in the ODUk service. More particularly, according to the signal flow direction and the location relations between different units in the same node, the system determines the units that execute different TCM levels, and executes different TCM levels in the same node in the specified sequence.

The signal flow direction of the TCM1 is "F->G" and "F->B->C->G", and the function unit used by TCM 1 is a tributary unit 12 shown in Figure 4. The signal flow direction of TCM2 is "F->G->H->L" and "F->J->K->L", and the function units used by TCM2 are OLUs 131, 132 and 133 shown in Figure 4.

Suppose that when an ODUk service signal is sent downstream through node F, only the signal transmitted on the trail "F->J->K->L" is correct. According to the description on TCM in the prior art, the ODUk service signal is sent to B, G and J after going through the source function of TCM1 on node F; and only the signal directed to node J is correct. Afterward, the signal goes through the source function of TCM2, and is also sent to B, G, and J; and only the signal directed to node J is correct. In this case, on node G, the signals from the trail "F->G" and the trail "F->B->C->G" trigger an LTC alarm of TCM1. The LTC alarm indicates that the signals from the two trails fail. However, the signal quality is the same, and no protection switching occurs. Meanwhile, TIM alarms are detected on node G. Suppose the function of TIM inserting AIS is set to be disabled, no signal indication is inserted downward at node G.

In this case, on node L, the signals from trail "F->G->H->L" and trail "F->J->K->L" are normal. From the aforementioned supposition, we know that only the signals from the trail "F->J->K->L" are correct, and the signals from the trail "F->G->H->L" are incorrect. Therefore, erroneous conclusion is drawn if protection switching is performed according to the description about the TCM function in the prior art in the aforementioned supposition.

In an embodiment of the present invention, the signals from node E are received on node F, and are sent to nodes B, G and J separately.

Suppose that due to errors of the cross-connect unit 11, the signals from the tributary unit 12 are sent to the OLU 133 only; the signals received by the OLU 131 and OLU 132 from the cross-connect unit 11 are incorrect and contain no correct customer service; the TCM1 is not handled correctly through the tributary unit 12. In this case, the signals sent from node F to node G and node B trigger LTC alarms.

Through the TCM-specific configuration under the present invention, the signals from node G to node H are found to have AIS defects, and the signals from node K have no AIS defect, if LTC inserting AIS is enabled. Therefore, the signals from node K are preferred.

Therefore, an embodiment of the present invention configures TCM levels for SNC/S protection, configures the items configurable for TCM levels when multiple TCM levels are used together, configures the sequence of executing different TCM levels, and specifies the location relations between the TCM and ODUk service cross-connect functions, thus fulfilling SNC/S protection and accomplishing interoperability between multiple SNC/S entities.

Furthermore, an apparatus for implementing SNC/S protection on an ODUk disclosed in another embodiment of the present invention includes:
a TCM allocating unit, adapted to allocate a TCM level to the specified ODUk service, wherein the different TCM levels are executed in the specified sequence in the same node if different TCM levels are allocated to the same node in the ODUk service; and
an SNC/S protection configuring unit, adapted to configure SNC/S protection for the ODUk service.

The TCM allocating unit includes:
a TCM allocating unit, adapted to allocate a TCM level to each node in the ODUk service; and
a TCM executing unit, adapted to execute the TCM level allocated to each node. If different TCM levels are allocated to the same node, the different TCM levels are executed in the specified sequence in the same node.

For the structure of a TCM executing unit, refer to the internal structure of an SNC/S protection apparatus shown in Figure 3. The structure of a TCM executing unit includes a tributary unit, an OLU, a cross-connect unit, a DE-MUX unit, and a MUX unit. If different TCM levels are allocated to the same node, the units execute different TCM levels in the specified sequence according to the signal flow and the relative location relations between the units.

It should be appreciated that the foregoing is only preferred embodiments of the invention and is not for limiting the invention. Any modification should be covered in the protection scope of the invention.

## Claims

1. A method for implementing Sub Net Connection Protection, SNCP, with Sub-layer monitoring, SNC/S, on an ODUk, comprising:
configuring a first Tandem Connection Monitoring, TCM, level and a second TCM level to an ODUk service and **characterized by**:
configuring a first SNC/S protection and a second SNC/S protection for the ODUk service, wherein a dual-transmitter node (F) and a first selective-receiver node (G) are obtained under the first SNC/S protection and the dual-transmitter node (F) and a second selective-receiver node (L) are obtained under the second SNC/S protection, wherein the first SNC/S protection includes a first working service trail and a first protection service trail that are between the dual-transmitter node (F) and the first selective-receiver node (G) and use the first TCM level, and wherein the second SNC/S protection includes a second working service trail and a second protection service trail that use the second TCM level;
if a signal flow direction of the first TCM level is from the dual-transmitter node (F) to the first selective-receiver node (G) over the first working service trail and the first protection service trail and a signal flow direction of the second TCM level is from the dual-transmitter node (F) to the second selective-receiver node (L) over the second working service trail and the second protection service trail, handling the first TCM level through a tributary unit (12) that is a function unit used by the first TCM level and the second TCM level through optical line units (13) that are function units used by the second TCM level; wherein the optical line units (13) are connected to the tributary unit (12) via a cross-connect unit (11) and comprise a first optical line unit (131), OLU (131), a second OLU (132) and a third OLU (133), wherein the first OLU (131) corresponds to the first protection service trail, the second OLU (132) corresponds to the first working service trail and the second working service trail, and the third OLU (133) corresponds to the second protection service trail.

2. The method of claim 1, wherein the process of allocating a first TCM level and a second TCM level to the ODUk service comprises:
enabling or disabling signal failure and signal deterioration information of a TCM to be transferred between different layers in a same node, and enabling or disabling fault information of the TCM to be transferred between different nodes through maintenance signals.

3. The method of claim 2, wherein:
if the signal failure and signal deterioration information of the TCM is configured as being transferable between different layers in the same node, the method further comprises:
allocating a sequence of executing different TCM levels in the same node; and
specifying location relations between the TCM and the ODUk service cross-connect unit.

4. The method of claim 3, wherein:
if the failure information of the TCM is configured as being transferable between different nodes through maintenance signals, the method further comprises:
configuring the fault information of the TCM to use Loss of Tandem Connection, LTC, as a condition of inserting an Alarm Indication Signal, AIS.

5. The method of claim 1, further comprising:
enabling or disabling each TCM level allocated to the ODUK service:
if the TCM level is enabled, handling the TCM level according to configured TCM attributes;
if the TCM level is disabled, not handling such TCM level.

6. The method of claim 5, wherein the process of handling the TCM level according to the configured TCM attributes comprises at least one of the following processes:
(i) for a source node that uses a TCM level, performing, by the system, an ODUk TCM Trail Termination Source, ODUkT_TT_So, function and an ODUk TCM/ODUk Adaptation Source, ODUkT/ODUk_A_So, function;
(ii) for a sink node that uses a TCM level, performing, by the system, an ODUk TCM Trail Termination Sink, ODUkT_TT_Sk, function and an ODUk TCM/ODUk Adaptation Sink, ODUkT/ODUk_A_Sk, function; and
(iii) if the user sets a protection group related to this TCM level, using, by the system, defects with respect to this TCM level, as protection switching conditions to perform protection switching.

## Patentansprüche

1. Verfahren zum Implementieren eines Teilnetzverbindungsschutzes (Sub Net Connection Protection, SNCP) mit Teilschichtüberwachung, SNC/S, auf einem ODUk, das Folgendes umfasst:
Konfigurieren einer ersten Tandemverbindungsüberwachungsebene (Tandem Connection Monitoring level, TCM-Ebene) und einer zweiten TCM-Ebene für einen ODUk-Dienst, und **gekennzeichnet durch**:
Konfigurieren eines ersten SNC/S-Schutzes und eines zweiten SNC/S-Schutzes für den ODUk-Dienst, wobei ein Knoten (F) mit dualem Sender und ein erster Knoten (G) mit selektivem Empfänger unter dem ersten SNC/S-Schutz und der Knoten (F) mit dualem Sender und ein zweiter Knoten (L) mit selektivem Empfänger unter dem zweiten SNC/S-Schutz erhalten werden, wobei der erste SNC/S-Schutz einen ersten Arbeits-Dienstpfad und einen ersten Schutz-Dienstpfad enthält, die sich zwischen dem Knoten (F) mit dualem Sender und dem ersten Knoten (G) mit selektivem Empfänger befinden und die erste TCM-Ebene verwenden, und wobei der zweite SNC/S-Schutz einen zweiten Arbeits-Dienstpfad und einen zweiten Schutz-Dienstpfad enthält, die die zweite TCM-Ebene verwenden;
falls eine Signalflussrichtung der ersten TCM-Ebene von dem Knoten (F) mit dualem Sender zu dem ersten Knoten (G) mit selektivem Empfänger über den ersten Arbeits-Dienstpfad und den ersten Schutz-Dienstpfad führt und eine Signalflussrichtung der zweiten TCM-Ebene von dem Knoten (F) mit dualem Sender zu dem zweiten Knoten (L) mit selektivem Empfänger über den zweiten Arbeits-Dienstpfad und den zweiten Schutz-Dienstpfad führt, Handhaben der ersten TCM-Ebene über eine Trabanteneinheit (12), die eine Funktionseinheit ist, die **durch** die erste TCM-Ebene und die zweite TCM-Ebene verwendet wird, **durch** optische Leitungseinheiten (13), die Funktionseinheiten sind, die **durch** die zweite TCM-Ebene verwendet werden; wobei die optischen Leitungseinheiten (13) mit der Trabanteneinheit (12) über eine "Cross-Connect"-Einheit (11) verbunden sind und eine erste optische Leitungseinheit (optical line unit, OLU) (131), eine zweite OLU (132) und eine dritte OLU (133) umfassen, wobei die erste OLU (131) dem ersten Schutz-Dienstpfad entspricht, die zweite OLU (132) dem ersten Arbeits-Dienstpfad und dem zweiten Arbeits-Dienstpfad entspricht und die dritte OLU (133) dem zweiten Schutz-Dienstpfad entspricht.

2. Verfahren nach Anspruch 1, wobei der Prozess des Zuweisens einer ersten TCM-Ebene und einer zweiten TCM-Ebene zu dem ODUk-Dienst Folgendes umfasst:
Aktivieren oder Deaktivieren von Signalausfall- und Signalverschlechterungsinformationen einer TCM, die zwischen unterschiedlichen Schichten in demselben Knoten übertragen werden sollen, und Aktivieren oder Deaktivieren von Fehlerinformationen der TCM, die zwischen verschiedenen Knoten durch Wartungssignale übertragen werden sollen.

3. Verfahren nach Anspruch 2, wobei:
das Verfahren, falls die Signalausfall- und Signalverschlechterungsinformationen der TCM als zwischen unterschiedlichen Schichten in demselben Knoten übertragbar konfiguriert sind, ferner Folgendes umfasst:
Zuweisen einer Folge zum Ausführen unterschiedlicher TCM-Ebenen in demselben Knoten; und
Spezifizieren von Standortbeziehungen zwischen dem TCM und der ODUk-Dienst-"Cross-Connect"-Einheit.

4. Verfahren nach Anspruch 3, wobei:
das Verfahren, falls die Ausfallinformationen der TCM als zwischen unterschiedlichen Knoten durch Wartungssignale übertragbar konfiguriert sind, ferner Folgendes umfasst:
Konfigurieren der Fehlerinformationen der TCM zum Verwenden von Tandemverbindungsverlust, LTC, als eine Bedingung zum Einfügen eines Alarmkennzeichensignals, AIS.

5. Verfahren nach Anspruch 1, das ferner Folgendes umfasst:
Aktivieren oder Deaktivieren jeder TCM-Ebene, die dem ODUk-Dienst zugewiesen ist:
falls die TCM-Ebene aktiviert ist, Handhaben der TCM-Ebene gemäß konfigurierten TCM-Attributen;
falls die TCM-Ebene deaktiviert ist, kein Handhaben einer solchen TCM-Ebene.

6. Verfahren nach Anspruch 5, wobei der Prozess des Handhabens der TCM-Ebene gemäß den konfigurierten TCM-Attributen wenigstens einen der folgenden Prozesse umfasst:
(i) für einen Quellknoten, der eine TCM-Ebene verwendet, Ausführen durch das System einer ODUk-TCM-Pfadbeendigungsquellenfunktion, ODUkT_TT_So-Funktion, und einer ODUk-TCM/ODUk-Anpassungsquellenfunktion, ODUkT/ODUk_A_So-Funktion;
(ii) für einen Senkenknoten, der eine TCM-Ebene verwendet, Ausführen durch das System einer ODUk-TCM-Pfadbeendigungssenkenfunktion, ODUk_T_TT_Sk-Funktion, und einer ODUk-TCM/ODUk-Anpassungssenkenfunktion, ODUkT/ODUk_A_Sk-Funktion; und
(iii) falls der Anwender eine Schutzgruppe einstellt, die sich auf diese TCM-Ebene bezieht, Verwenden durch das System von Defekten mit Bezug auf diese TCM-Ebene als Schutzumschaltungsbedingungen, um Schutzumschaltung auszuführen.

## Revendications

1. Procédé permettant de mettre en oeuvre une protection de connexion de sous-réseau, SNCP, avec un contrôle de sous-couche, SNC/S, sur un ODUk, comprenant les étapes suivantes :
configurer un premier niveau de contrôle de connexion en tandem, TCM, et un deuxième niveau TCM à un service ODUk, **caractérisé par** :
configurer une première protection SNC/S et une deuxième protection SNC/S pour le service ODUk, un noeud de double transmetteur (F) et un premier noeud de récepteur sélectif (G) étant obtenus sous la première protection SNC/S et le noeud de double transmetteur (F) et un deuxième noeud de récepteur sélectif (L) étant obtenus sous la deuxième protection SNC/S, la première protection SNC/S comportant une première trace de service de travail et une première trace de service de protection qui sont situées entre le noeud de double transmetteur (F) et le premier noeud de récepteur sélectif (G) et qui utilisent le premier niveau TCM, et la deuxième protection SNC/S comportant une deuxième trace de service de travail et une deuxième trace de service de protection qui utilisent le deuxième niveau TCM ;
si une direction de flux de signal du premier niveau TCM passe du noeud de double transmetteur (F) au premier noeud de récepteur sélectif (G) sur la première trace de service de travail et sur la première trace de service de protection et si une direction de flux de signal du deuxième niveau TCM passe du noeud de double transmetteur (F) au deuxième noeud de récepteur sélectif (L) sur la deuxième trace de service de travail et sur la deuxième trace de service de protection, traiter le premier niveau TCM par l'intermédiaire d'une unité tributaire (12) qui est une unité de fonction utilisée par le premier niveau TCM et le deuxième niveau TCM par le biais d'unités de lignes optiques (13) qui sont des unités de fonction utilisées par le deuxième niveau TCM ; les unités de lignes optiques (13) étant connectées à l'unité tributaire (12) par une unité de répartiteur (11) et comportant une première unité de ligne optique (131), OLU (131), un deuxième OLU (132) et un troisième OLU (133), le premier OLU (131) correspondant à la première trace de service de protection, le deuxième OLU (132) correspondant à la première trace de service de travail et à la deuxième trace de service de travail , et le troisième OLU (133) correspondant à la deuxième trace de service de protection.

2. Procédé selon la revendication 1, dans lequel le processus consistant à attribuer un premier niveau TCM et un deuxième niveau TCM au service ODUk comprend :
activer ou désactiver des informations de détérioration du signal et de défaillance du signal d'un TCM devant être transféré entre différentes couches dans un même noeud, et activer ou désactiver des informations de défaut du TCM devant être transféré entre différents noeuds par l'intermédiaire de signaux de maintenance.

3. Procédé selon la revendication 2, dans lequel :
si les informations de détérioration du signal et de défaillance du signal du TCM sont configurées comme étant transférables entre différentes couches dans le même noeud, le procédé comprend en outre :
allouer une séquence consistant à exécuter différents niveaux TCM dans le même noeud ; et
spécifier des relations d'emplacement entre le TCM et l'unité de répartiteur de service ODUk.

4. Procédé selon la revendication 3, dans lequel :
si les informations de défaillance du TCM sont configurées comme étant transférables entre différents noeuds par l'intermédiaire de signaux de maintenance, le procédé comprend en outre :
configurer les informations de défaut du TCM pour utiliser une perte de connexion en tandem, LTC, comme une condition d'insérer un signal d'indication d'alarme, AIS.

5. Procédé selon la revendication 1, comprenant en outre les étapes suivantes :
activer ou désactiver chaque niveau TCM alloué au service ODUk :
si le niveau TCM est activé, traiter le niveau TCM selon les attributs TCM configurés ;
si le niveau TCM est désactivé, ne pas traiter un tel niveau TCM.

6. Procédé selon la revendication 5, dans lequel le processus consistant à traiter le niveau TCM selon les attributs TCM configurés comprend au moins un des processus suivants :
(i) pour un noeud source qui utilise un niveau TCM, exécuter, par le système, une fonction de source de terminaison de trace ODUk TCM, ODUkT_TT_So, et une fonction de source d'adaptation ODUk TCM/ODUk, ODUkT/ODUk_A_So ;
(ii) pour un noeud de collecteur qui utilise un niveau TCM, exécuter, par le système, une fonction de collecteur de terminaison de trace ODUk TCM, ODUkT_TT_Sk, et une fonction de collecteur d'adaptation ODUk TCM/ODUk, ODUkT/ODUk_A_Sk ; et
(iii) si l'utilisateur crée un groupe de protection associé à ce niveau TCM, utiliser, par le système, des défauts relativement à ce niveau TCM, comme conditions de commutation de protection pour exécuter une commutation de protection.
